# EUROPEAN PATENT SPECIFICATION

(11) **EP 0 497 813 B1**
(45) Date of publication and mention of the grant of the patent: **31.08.1994**
(21) Application number: 90915506.1
(22) Date of filing: 22.10.1990
(51) Int. Cl.: G01B 11/00, G01B 21/04

(54) **CALIBRATION OF MEASURING APPARATUS**
EICHEN VON MESSAPPARATEN
CALIBRAGE D'APPAREILS DE MESURE

(30) Priority: 24.10.1989 GB 8923948
(43) Date of publication of application: 12.08.1992
(73) Proprietor: LK LIMITED, Castle Donington, Derby DE7 2SA (GB)
(72) Inventor: Bury, James, Allestree Derby DE32hh (GB)
(74) Representative: Drever, Ronald Fergus
(86) International application number: GB9001618
(87) International publication number: WO9106826

(56) References cited:
- EP-A- 0 143 012
- DE-C- 3 833 589
- US-A- 4 396 945
- US-A- 4 639 878
- Aircraft Engineering, vol. 57, no. 8, August 1985, (London, GB), A. Lardelli: "ECDS1 - An electronic coordinate determination system for industrial applications", pages 2-5
- Onde Electronique, vol. 65, no. 4 (juillet-août 1985, (Paris, FR), M. Mayoud: "Géodésie et métrologie du LEP", pages 38-43
- Technische Rundschau, vol. 80, no. 41, 7 October 1988, (Bern, CH), L. Nawara et al: "Überprüfung von Koordinatenmessgeräten mit Normalen", pages 54-57

## Description

The present invention relates to the calibration of measuring apparatus, and in particular to the calibration of apparatus for determining the spatial relationship between two relatively movable components. An example of such apparatus is a co-ordinate measuring machine (CMM) which is used to determine the relationship between the machine and a workpiece for accurately measuring the workpiece or controlling its relationship with other machinery.

In carrying out work on a workpiece, such as manufacturing the workpiece or measuring the workpiece, or assessing its quality or fitness for purpose, it is sometimes necessary to present the workpiece to the machine or present the machine to the workpiece in a variety of different linear or angular positions. Usually the work carried out on the workpiece at the different positions must be accurately related so that all the dimensions produced or measured relate to a common co-ordinate system for the workpiece as a whole. A system of co-ordinates with any number of axes may be used and the system may be orthogonal, cylindrical polar, spherical polar or other.

For example, when measuring features on a workpiece in three dimensions, it is often necessary to have access to many different orthogonal faces of the workpiece or access at various angles to the axes of the machine. A conventional way of achieving this is to use a rotary table with a vertical rotation axis to carry the workpiece. To achieve accuracy one way is to use an accurate and therefore expensive rotary table and to align this to the machine axes very accurately. Alternatively, any misalignment or angular dividing error can be calibrated at all those angles of rotation of the rotary table which are to be used. Because of coning errors of most rotary tables, multiple calibration, rather than accurate alignment, is the preferred method and removes the need for extreme accuracy of the rotary table but still leaves a requirement of very good positional repeatability which means that the rotary table will still be expensive.

With very large workpieces, it is particularly difficult to achieve the required degree of angular accuracy and/or repeatability of the rotary table, since for a given degree of linear accuracy, the angular accuracy must be better in proportion to the increase in the radius. Also for very large workpieces, a rotary table may be prohibitively expensive or impractical.

Our co-pending patent application describes apparatus for determining the spatial relationship of two relatively movable components. The apparatus comprises means for moving at least one of the components relative to the other into a selected one of a plurality of positions, and means providing effectively for a six point kinematic location of said one component at each of the plurality of positions.

For example, a CMM may have a rotary table on which a workpiece is placed and which can be turned to several measuring positions from which different aspects of the workpiece may be measured. At each location, the pallet has a six point kinematic location.

The techniques described in our co-pending application allow accurate measurement of the workpiece relative to these measuring positions. There remains the problem of calibrating the arrangement and it is this problem to which the present invention is addressed.

The present invention provides calibration apparatus for use in the calibration of measuring apparatus of the type which determines the spatial relationship of two relatively movable components and which comprises means for moving one of the components relative to the other into a selected one of a plurality of measuring positions, and which further comprises means providing six point kinematic location of the one movable component at each of the measuring positions, the calibration apparatus being characterised by comprising a real or notional fixable article fixedly locatable on the one movable component, the position of the fixable article being measurable in relation to at least one fixed position when the movable component occupies any of at least two of the measuring positions thereby enabling the spatial relationship of those measuring positions to be wholly or partially determined and enabling measurements made by the measuring apparatus at each of the measuring positions to be related to each other.

The position of the fixable article is preferably measurable in relation to the same fixed position or positions when the movable member is located at any of the measuring positions. The fixable article may be a notional article created by moving a member between a plurality of points in relation to the movable component, the member being fixedly locatable at each of the said points. The fixable article may be fixedly locatable on the movable component by means providing six point kinematic location.

The calibration apparatus may further comprise second measuring apparatus operable to determine the spatial relationship of the or each fixed position and the fixable article.

The second measuring apparatus is preferably operable to perform measurement by projecting a beam between the or each fixed position and the fixable article when the movable component is located at a measuring position. The beam may be a laser beam. The second measuring apparatus may comprise a laser tracker device and a retro-reflector device for receiving a beam projected from the tracker device. The second measuring apparatus may comprise beam projecting means or beam receiving means movable between the fixed positions, the fixable article comprising beam receiving means or beam projecting means, respectively.

The apparatus may further comprise means for establishing six point kinematic location of the beam projecting or receiving means at each of the fixed positions.

The measuring apparatus being calibrated may be operable to provide measurements between the fixed position and the fixable article. The fixable article may be a calibration artefact defining such a plurality of points as to enable measurement to allow the spatial relation of the movable member and the fixed position to be determined by measurements taken between each point for measurement and the fixed position. The calibration artefact may define four points for measurement. The calibration artefact may be a tetrahedron, defining a point for measurement at each apex.

The apparatus may comprise level measuring means carried by the movable component and operable to measure rotation of the movable component about at least one horizontal axis. The second measuring apparatus may further comprise means operable to detect rotation of the movable component about a vertical axis.

The invention also provides calibration apparatus for use in the calibration of measuring apparatus of the type which is operable to determine the spatial relationship between a fixed position and a plurality of points on a movable component of the measuring apparatus, the movable component being movable between at least two measuring positions, characterised by a real or notional fixable article or articles which define points so located on the movable component that for each pair of adjacent measuring positions, there exists at least one point whose spatial relationship relative to the fixed position can be determined when the movable component is located at either measuring position of the pair, whereby the spatial relationship of each measuring position of the movable component with reference to a neighbouring measuring position may be determined, and hence the measuring position calibrated.

Examples of apparatus embodying the present invention will now be described in more detail, by way of example only, and with reference to the accompanying drawings, in which:
Fig. 1 is a schematic plan view of apparatus according to the invention in use for measuring an airframe;
Fig. 2 is a schematic view indicating how kinematic location may be provided;
Fig. 3 is a schematic perspective view of a pallet for use in an alternative embodiment as the rotary table of a CMM; and
Fig. 4 is a view similar to Fig. 3 of a further alternative embodiment.

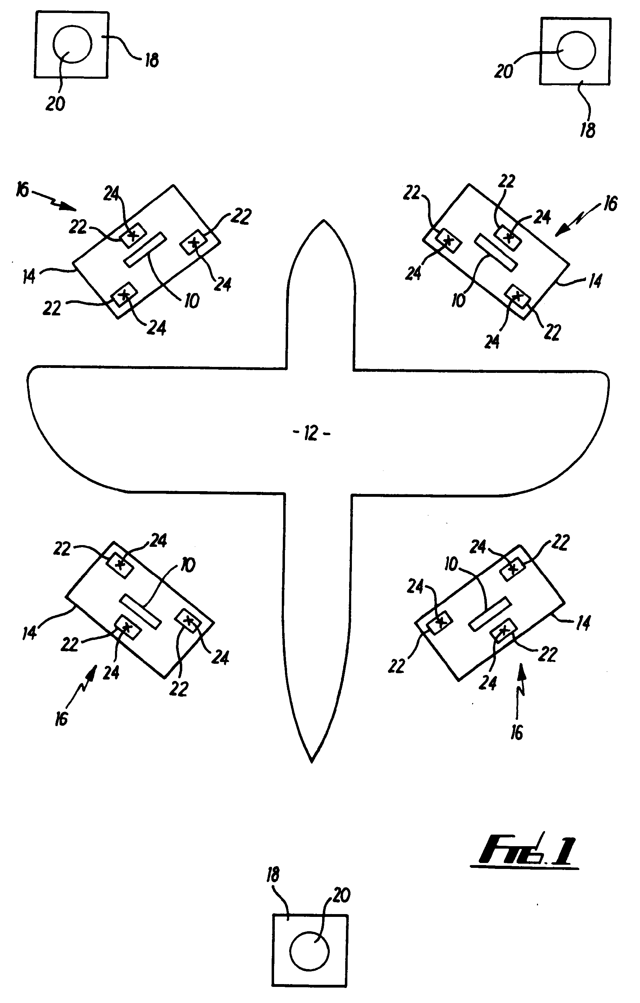

The apparatus to be described in relation to Fig. 1 is for use in the calibration of measuring apparatus including a CMM 10 which determines the spatial relationship between the CMM 10 and a workpiece 12 such as an airframe. In view of the size of the airframe 12, relative movement between the CMM and airframe is provided by mounting the CMM on a movable pallet 14. The pallet 14 is movable to a plurality of measuring positions 16. Four positions 16 are shown in Fig. 1, and a pallet 14 is shown at each position, for convenience. In practice, there may be considerably more positions 16, and only one position would normally be occupied by a pallet at any one time.

Six point kinematic location of the pallet 14 is provided at each of the positions 16, in the manner described in our co-pending application referred to above.

The apparatus further comprises second measuring apparatus to be described below and operable to determine the spatial relationship of the pallet 14 at its measuring positions 16 relative to a plurality of fixed positions 18, for the purposes of calibration.

The calibration apparatus operates by projecting laser beams between the fixed positions 18 and the pallet 14. The preferred arrangement is to use a laser tracker device to project the beam, and a retro-reflector device (hereafter referred to as a retro) to return the beam to the tracker. Suitable trackers and retros are known. The tracker device 20 may be located at one of the fixed positions 18, with the retro device 22 being an article mounted on the pallet 14, or the positions of the tracker 20 and retro 22 could be reversed.

A tracker 20 may be permanently located at each fixed position 18. Alternatively, a single tracker device 20 could be provided, movable between the fixed positions 18, and having six point kinematic location at each position 18. Similarly, a single retro 22 could be permanently mounted on the pallet, but there are preferably provided three or more retros 22 mounted at respective points 24 on the pallet 14, or means for moving a single retro 22 between three or more points 24 on the pallet 14, and for providing six point kinematic location of the retro 22 at each point 24 on the pallet 14.

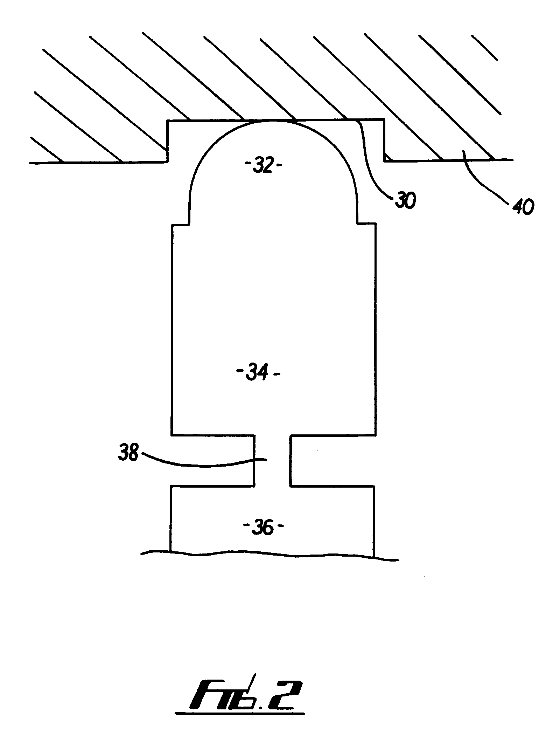

Kinematic location described above can be provided on the basis of the apparatus shown schematically in Fig. 2. True kinematic location requires point contact between two components, such as a sphere and a flat surface. In the example shown, a flat surface 30 is supported on the spherical tip 32 of a stalk 34. The stalk 34 is itself mounted on a fixed member 36 through a hinge portion 38.

The flat 30 is formed on a body 40 which may be the pallet 14. Six flats are provided on the pallet 14, and six stalks are provided in corresponding positions. In order to kinematically locate the pallet 14, the flats 30 are rested on the corresponding spheres 32, and a clamping mechanism (not shown) then clamps the pallet 14 down on to the stalks 34. In so doing, there may be slight relative movement of one or more sphere 32 in relation to its flat 30, possibly accompanied by small transverse movement of the stalk 34 on the hinge 38. By providing an accurately repeatable clamping force, this arrangement allows accurately repeatable kinematic location to be obtained as is described in more detail in our co-pending application, which also describes various alternative arrangements for providing kinematic location.

The apparatus shown in Fig. 1 can be used for calibration in the following manner. Firstly, the separation of the three points 24 is accurately measured, for instance by laser interferometry.

The pallet 14 is then located at one of the fixed positions 16, with the retro 22 at one of the three points 24, and the tracker 20 located at one of the fixed positions 18. A beam is established between the tracker 20 and the retro 22. The retro 22 is then moved to the other two points 24 in turn, without breaking the beam, to determine the spatial relationship of those two points relative to the first point 24. The tracker 20 is moved to another position 18 (without breaking the beam) and a further three measurements are taken by moving the retro to the three points 24. Finally, three measurements are taken from the three points 24 with the tracker 20 at the third position 18. The whole process is then repeated for each of the measuring positions 16.

A large number of measurements would therefore be taken if all three fixed positions 18 are visible from all three points 24 when the pallet is in any of the measuring positions 16. In practice, especially when working with a large workpiece such as an airframe, it is unlikely that all of these measurements will be possible, but all measurements which are possible should preferably be taken. All possible measurements must be taken without breaking the beam, to ensure that they all relate to the same datum.

In the situation being described, it is necessary to have at least three fixed positions 18, and at least three points 24, so that at least six measurements can be taken at each pallet position 16. These can be, for instance, two measurements of each point 24 from different fixed positions 18. Other combinations are possible which fulfil the minimum requirement of six measurements at each position 16, of which there must be at least one from each point 24. If more measurements than the minimum can be taken, the results involve a degree of redundancy which can be used to enhance the accuracy of the technique. In many practical situations, especially if the number of positions 18 or points 24 is increased, a high degree of redundancy is expected to be possible, resulting in accurate results.

Once these results are known, the apparatus can be considered to have been calibrated, because the pallet 14 can thereafter be moved back to the calculated positions with a high degree of repeatability, by virtue of the kinematic location used for the pallet.

Measurement of the workpiece can now begin. The pallet 14 is kinematically located at one of the measuring positions 16 and measures all accessible features of the airframe 12 from that position. The pallet 14 can then be moved to another position 16 for a second view of the workpiece to be taken. There may be as many measuring positions as required to provide an adequate number of views of the workpiece. The views taken from each of the positions 16 can be related to each other by virtue of the calibration, in order to provide an accurate overall measurement of the workpiece in a consistent co-ordinate system.

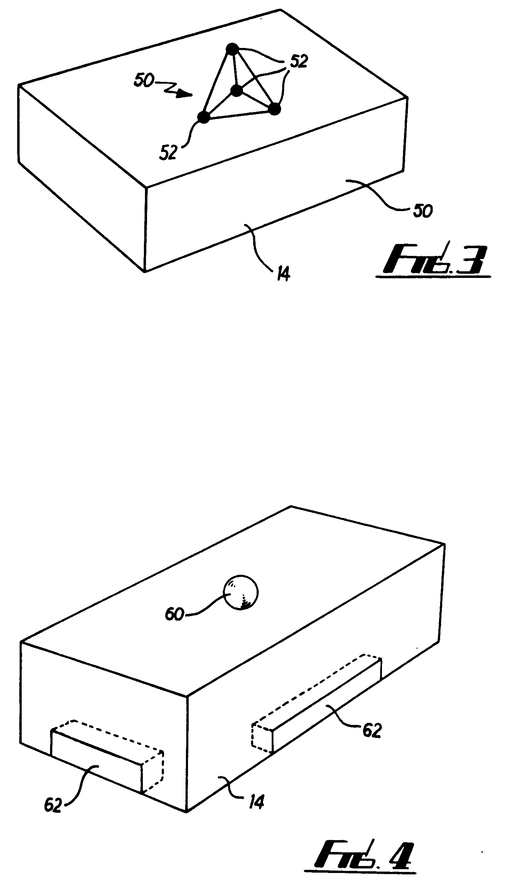

In moving the retro 22 around the pallet 14, as described above, the technique is creating a notional article of known shape and size (determined by the layout of the three points 24) fixed to the pallet 14. In a variation of the arrangement described above, and particularly applicable to a CMM with a rotary table, a real article such as a physical artefact 50 (Fig. 3) may be fixedly mounted on the table 14 for calibration purposes. This may be a tetrahedron. Calibration then proceeds by taking measurements with the CMM (which acts from a fixed point) from at least three points 52 of the tetrahedron 50. The table is then rotated to a new position (and located there by kinematic location) and three more measurements are taken from the points 52, to determine the spatial relationship of the second table position in relation to the first. The process can be repeated for a large number of table positions.

Clearly, four measurements should be taken if possible, but many designs of CMM are likely to prevent more than three of the points being reached at any table position. The geometry of the tetrahedron is such that a physical artefact can be accurately described on the basis of solely linear measurements, so that the measurements taken at each table position can be related even if a different selection of points is measured at each.

A further alternative particularly applicable to a CMM with a rotary table is indicated schematically in Fig. 4. In this arrangement, the table (or pallet) 14 is provided with only one sphere 60 whose position can be measured by the CMM. Additionally, two mutually perpendicular level measuring means 62 are fixed on the pallet 14 to allow tilt of the pallet about two mutually perpendicular horizontal axes to be measured. In this arrangement, the single sphere 40 is sufficient to establish the linear relationship between two table positions, and the levels 62 allow two of the angular co-ordinates to be determined. The third angular co-ordinate (about the vertical axis) could be measured by conventional techniques such as the use of an auto-collimator, laser interferometer with angular option or other similar apparatus.

It will be understood that many variations and modifications may be made to the above apparatus without departing from the scope of the present invention. In particular, the apparatus for providing kinematic location, and the apparatus for determining the spatial relationship between the fixed positions and the pallet can all be changed according to operating requirements. The layout of the fixed positions and the measuring positions can be selected according to the shape and size of the workpiece.

## Claims

1. Calibration apparatus for use in the calibration of measuring apparatus (10) of the type which determines the spatial relationship of two relatively movable components (12,14) and which comprises means for moving one of the components (14) relative to the other (12) into a selected one of a plurality of measuring positions (16), and which further comprises means (30,32,34,36) providing six point kinematic location of the one movable component (14) at each of the measuring positions (16), the calibration apparatus being characterised by comprising a real or notional fixable article (22) fixedly locatable on the one movable component (14), the position of the fixable article (22) being measurable in relation to at least one fixed position (18) when the one movable component (14) occupies any of at least two of the measuring positions (16) thereby enabling the spatial relationship of those measuring positions (16) to be wholly or partially determined, enabling measurements made by the measuring apparatus at each of the measuring positions to be related to each other.

2. Calibration apparatus according to Claim 1, characterised in that the position of the fixable article (22) is measurable in relation to the same fixed position or positions (20) when the movable member (14) is located at any of the measuring positions (16).

3. Calibration apparatus according to Claim 1 or 2, characterised in that the fixable article (22) is a notional article created by moving a member between a plurality of points (24) in relation to the movable component (14), the member being fixedly locatable at each of the said points (24).

4. Calibration apparatus according to any of Claims 1 to 3, characterised in that the fixed article (22) is fixedly locatable on the movable component (14) by means (30,32,34,36,38) providing six point kinematic location.

5. Calibration apparatus according to any of the preceding Claims, characterised by second measuring apparatus (20,22) operable to determine the spatial relationship of the or each fixed position (18) and the fixable article (22).

6. Calibration apparatus according to Claim 5, characterised in that wherein the second measuring apparatus (20,22) is operable to perform measurement by projecting a beam between the or each fixed position (18) and the fixable article (22) when the movable component (14) is located at a measuring position (16).

7. Calibration apparatus according to Claim 6, characterised in that the beam is a laser beam.

8. Calibration apparatus according to Claim 5, characterised in that the second measuring apparatus (20,22) comprises a laser tracker device (20) and a retro-reflector device (22) for receiving a beam projected from the tracker device (20).

9. Calibration apparatus according to Claim 5, characterised in that the second measuring apparatus (20,22) comprises beam projecting means (22) or beam receiving means (20) movable between the fixed positions (18), the fixable article (22) comprising beam receiving means (20) or beam projecting means (22), respectively.

10. Calibration apparatus according to any of the preceding Claims, characterised by comprising means for establishing six point kinematic location of the beam projecting (22) or receiving means (20) at each of the fixed positions (18).

11. Calibration apparatus according to any of the preceding Claims, characterised in that the measuring apparatus (10) being calibrated is operable to provide measurements between the fixed position and the fixable article.

12. Calibration apparatus according to Claim 11, characterised in that the fixable article (22) is a calibration artefact (50) defining such a plurality of points (24) for measurement to allow the spatial relation of the movable member (14) and the fixed position (18) to be determined by measurements taken between each point for measurement and the fixed position.

13. Calibration apparatus according to Claim 12, characterised in that the calibration artefact (50) defines four points for measurement.

14. Calibration apparatus according to Claim 13, characterised in that the calibration artefact is a tetrahedron (50), defining a point for measurement at each apex.

15. Calibration apparatus according to any of the preceding Claims, characterised by comprising level measuring means (62) carried by the movable component and operable to measure rotation of the movable component about at least one horizontal axis.

16. Calibration apparatus according to Claim 15, characterised in that the second measuring apparatus further comprises means (60) operable to detect rotation of the movable component about a vertical axis.

17. Calibration apparatus for use in the calibration of measuring apparatus of the type which is operable to determine the spatial relationship between a fixed position (18) and a plurality of points on a movable component (14) of the measuring apparatus, the movable component being movable between at least two measuring positions, characterised by a real or notional fixable article (22,50) or articles which define points (24,52, 60,62) so located on the movable component (14) that for the or each pair of adjacent measuring positions (16), there exists at least one point (24,52,60,62) whose spatial relationship relative to the fixed position (18) can be determined when the movable component (14) is located at either measuring position (16) of the pair, whereby the spatial relationship of each measuring position of the movable component with reference to a neighbouring measuring position may be determined, and hence the measuring apparatus calibrated.

## Patentansprüche

1. Kalibriervorrichtung zur Verwendung bei der Kalibrierung einer Meßvorrichtung (10) von dem Typ, der die räumliche Relation von zwei relativ bewegbaren Komponenten (12,14) bestimmt und der Mittel zum Bewegen einer der Komponenten (14) relativ zur anderen (12) in eine ausgewählte Meßposition einer Mehrzahl von Meßpositionen (16) enthält, und der ferner Mittel (30,32,34,36) enthält, die an jeder Meßposition (16) eine kinematische Sechspunktlokalisierung der bewegbaren Komponente (14) ermöglichen, wobei die Kalibriervorrichtung dadurch gekennzeichnet ist, daß sie einen realen oder imaginären fixierbaren Gegenstand (22), der fest an der einen bewegbaren Komponente (14) lokalisierbar ist, enthält, wobei die Position des fixierbaren Gegenstandes (22) in Relation zu mindestens einer festen Position (18) meßbar ist, wenn die eine bewegbare Komponente (14) irgend eine von mindestens zwei der Meßpositionen (16) einnimmt, wodurch die räumliche Relation solcher Meßpositionen (16) ganz oder teilweise bestimmt werden kann, wobei durch die Meßvorrichtung an jeder der Meßpositionen ausgeführte Messungen in Relation zueinander gesetzt werden können.

2. Kalibriervorrichtung nach Anspruch 1, dadurch gekennzeichnet, daß die Position des fixierbaren Gegenstandes (22) in Relation zu der gleichen festen Position oder Positionen meßbar ist, wenn das bewegbare Glied (14) an irgendeiner der Meßpositionen (16) lokalisiert ist.

3. Kalibriervorrichtung nach Anspruch 1 oder 2, dadurch gekennzeichnet, daß der fixierbare Gegenstand (22) ein imaginärer Gegenstand ist, der durch Bewegen eines Glieds, zwischen einer Mehrzahl von Punkten (24)in Relation zu der bewegbaren Komponente (14) erzeugt wird, wobei das Glied an jedem der Punkte (24) fest lokalisierbar ist.

4. Kalibriervorrichtung nach einem der Ansprüche 1 bis 3, dadurch gekennzeichnet, daß der fixierte Gegenstand (22) an der bewegbaren Komponente (14) fest lokalisierbar ist, indem eine kinematische Sechspunktlokalisierung (30,32,34, 36,38) vorgesehen ist.

5. Kalibriervorrichtung nach einem der vorstehenden Ansprüche, gekennzeichnet durch eine zweite Meßvorrichtung (20,22), die zum Bestimmen der räumlichen Relation der oder jeder fixierten Position (18) und des fixierbaren Gegenstandes (22) betreibbar ist.

6. Kalibriervorrichtung nach Anspruch 5, dadurch gekennzeichnet, daß die zweite Meßvorrichtung (20,22) zum Ausführen einer Messung durch Werfen eines Strahls zwischen der oder jeder fixierten Position (18) und dem fixierbaren Gegenstand (22) betreibbar ist, wenn die bewegbare Komponente (14) an einer Meßposition (16) lokalisiert ist.

7. Kalibriervorrichtung nach Anspruch 6, dadurch gekennzeichnet, daß der Strahl ein Laserstrahl ist.

8. Kalibriervorrichtung nach Anspruch 5, dadurch gekennzeichnet, daß die zweite Meßvorrichtung (20,22) eine Laser-Nachführeinrichtung (20) und eine Retro-Reflektoreinrichtung (22) zum Empfangen eines von der Nachführeinrichtung (20) ausgehenden Strahls enthält.

9. Kalibriervorrichtung nach Anspruch 5, dadurch gekennzeichnet, daß die zweite Meßvorrichtung (20,22) Strahlaussendemittel (22) oder Strahlempfangsmittel (20) enthält, die zwischen den fixierten Positionen (18) bewegbar sind, wobei der fixierbare Gegenstand (22) Strahlempfangsmittel (20) bzw. Strahlaussendemittel (22) aufweist.

10. Kalibriervorrichtung nach einem der vorstehenden Ansprüche, gekennzeichnet durch Mittel zum Herstellen einer kinemtischen Sechspunktlokalisierung der Strahlaussende- (22) oder -empfangsmittel (20) an jeder der fixierten Positionen (18) enthält.

11. Kalibriervorrichtung nach einem der vorstehenden Ansprüche, dadurch gekennzeichnet, daß die Meßvorrichtung (10), ist sie kalibriert, zum Ausführen von Messungen zwischen der fixierten Position und dem fixierbaren Gegenstand betreibbar ist.

12. Kalibriervorrichtung nach Anspruch 11, dadurch gekennzeichnet, daß der fixierbare Gegenstand (22) ein Kalibriergerät (50) ist, das eine solche ausreichende Mehrzahl von Meßpunkten (24) definiert, daß eine Bestimmung der räumlichen Relation des bewegbaren Glieds (14) und der fixierten Position (18) durch zwischen jedem Meßpunkt und der fixierten Position ausgeführte Messungen ermöglicht wird.

13. Kalibriervorrichtung nach Anspruch 12, dadurch gekennzeichnet, daß das Kalibriergerät (50) vier Meßpunkte definiert.

14. Kalibriervorrichtung nach Anspruch 13, dadurch gekennzeichnet, daß das Kalibriergerät ein Tetraeder (50) ist, der an jeder Spitze einen Meßpunkt definiert.

15. Kalibriervorrichtung nach einem der vorstehenden Ansprüche, dadurch gekennzeichnet, daß sie Niveaumeßmittel (62) enthält, die von der bewegbaren Komponente getragen werden und zum Messen einer Rotation der bewegbaren Komponente um mindestens eine horizontale Achse betreibbar sind.

16. Kalibriervorrichtung nach Anspruch 15, dadurch gekennzeichnet, daß die zweite Meßvorrichtung ferner Mittel (60) enthält, die zum Detektieren einer Rotation der bewegbaren Komponente um eine vertikale Achse betreibbar sind.

17. Kalibriervorrichtung zur Verwendung bei der Kalibrierung einer Meßvorrichtung, von dem Typ, der zum Bestimmen der räumlichen Relation zwischen einer fixierten Position (18) und einer Mehrzahl von Punkten an einer bewegbaren Komponente (14) der Meßvorrichtung betätigbar ist, wobei die bewegbare Komponente zwischen mindestens zwei Meßpositionen bewegbar ist, gekennzeichnet durch einen realen oder imaginären fixierbaren Gegenstand (22,50) oder Gegenstände, die an der bewegbaren Komponente (14) so lokalisierte Punkte (24,52,60,62) definiert, daß für das oder jedes Paar von einander gegenüberliegenden Meßpositionen (16) mindestens ein Punkt (24,52,60,62) existiert, dessen räumliche Relation relativ zu der fixierten Position (18) bestimmt werden kann, wenn die bewegbare Komponente (14) in jeder Meßposition (16) des Paares lokalisiert ist, wodurch die räumliche Beziehung jeder Meßposition der bewegbaren Komponente mit Bezug auf eine benachbarte Meßposition bestimmt und somit die Meßvorrichtung kalibriert werden kann.

## Revendications

1. Appareil de calibrage destiné à être utilisé dans le calibrage d'appareils de mesure (10) du type déterminant la relation spatiale entre deux composants (12, 14) mobiles l'un par rapport à l'autre et qui comprend des moyens de déplacer l'un des composants (14) par rapport à l'autre (12) dans une position choisie parmi une pluralité de positions de mesure (16), et qui comprend, en outre, des moyens (30, 32, 34, 36) indiquant l'emplacement cinématique en six points du composant mobile (14), dans chacune des positions de mesure (16), l'appareil de calibrage étant caractérisé en ce qu'il comprend un objet (22) réel ou fictif fixable, susceptible d'être positionné de façon fixe sur le composant mobile (14), la position de l'objet (22) fixable pouvant être mesurée par rapport à au moins une position fixe (18) lorsque le composant mobile (14) occupe l'une quelconque des positions de mesure (16), choisie parmi au moins deux, permettant ainsi à la relation spatiale de ces positions de mesure (16) d'être totalement ou partiellement déterminée, ce qui permet aux mesures prises par l'appareil de mesure, dans chacune des positions de mesure, d'être mises en relation les unes avec les autres.

2. Appareil de calibrage selon la revendication 1, caractérisé en ce que la position de l'objet (22) fixable est susceptible d'être mesurée par rapport à la même position ou positions (20) fixe(s) lorsque le composant mobile (14) occupe l'une quelconque des positions de mesure (16).

3. Appareil de calibrage selon la revendication 1 ou 2, caractérisé en ce que l'objet (22) fixable est un objet fictif créé en déplaçant un composant entre une pluralité de points (24) par rapport au composant mobile (14), le composant étant susceptible d'être positionné de façon fixe à chacun desdits points (24).

4. Appareil de calibrage selon l'une quelconque des revendications 1 à 3, caractérisé en ce que l'objet (22) fixé est susceptible d'être positionné de façon fixe sur le composant mobile (14) grâce à des moyens (30, 32, 34, 36, 38) indiquant l'emplacement cinématique en six points.

5. Appareil de calibrage selon l'une quelconque des revendications précédentes, caractérisé par un deuxième appareil de mesure (20, 22) susceptible de déterminer la relation spatiale de la ou de chaque position fixe (18) et de l'objet (22) fixable.

6. Appareil de calibrage selon la revendication 5, caractérisé en ce que le deuxième appareil de mesure (20, 22) est susceptible d'effectuer la mesure en projetant un rayon entre la ou chaque position fixe (18) et l'objet (22) fixable lorsque le composant mobile (14) se situe dans une position de mesure (16).

7. Appareil de calibrage selon la revendication 6, caractérisé en ce que le rayon est un rayon laser.

8. Appareil de calibrage selon la revendication 5, caractérisé en ce que le deuxième appareil de mesure (20, 22) comprend un suiveur laser (20) et un rétro-système (22) destiné à recevoir un rayon projeté par le suiveur (20).

9. Appareil de calibrage selon la revendication 5, caractérisé en ce que le deuxième appareil de mesure (20, 22) comprend des moyens de projection de rayon (22) ou des moyens de réception de rayon (20) susceptibles de se déplacer entre les positions fixes (18), l'objet (22) fixable comprenant des moyens de réception de rayon (20) ou des moyens de projection de rayon (22), respectivement.

10. Appareil de calibrage selon l'une quelconque des revendications précédentes, caractérisé en ce qu'il comprend des moyens permettant de déterminer l'emplacement cinématique en six points des moyens de projection de rayon (22) ou de réception de rayon (20) dans chacune des positions fixes (18).

11. Appareil de calibrage selon l'une quelconque des revendications précédentes, caractérisé en ce que l'appareil de mesure (10) en cours de calibrage est susceptible de fournir des mesures entre la position fixe et l'objet fixable.

12. Appareil de calibrage selon la revendication 11, caractérisé en ce que l'objet (22) fixable est un artefact de calibrage (50) définissant une pluralité de points (24) de mesure telle qu'elle permet de déterminer la relation spatiale du composant mobile (14) et la position fixe (18), au moyen de mesures prises entre chaque point de mesure et la position fixe.

13. Appareil de calibrage selon la revendication 12, caractérisé en ce que l'artefact de calibrage (50) définit quatre points de mesure.

14. Appareil de calibrage selon la revendication 13, caractérisé en ce que l'artefact de calibrage est un tétraèdre (50) définissant un point de mesure à chaque sommet.

15. Appareil de calibrage selon l'une quelconque des revendications précédentes, caractérisé en ce qu'il comprend des moyens de mesure de niveau (62) portés par le composant mobile et susceptibles de mesurer la rotation du composant mobile autour d'au moins un axe horizontal.

16. Appareil de calibrage selon la revendication 15, caractérisé en ce que le deuxième appareil de mesure comprend, en outre, des moyens (60) susceptibles de détecter la rotation du composant mobile autour d'un axe vertical.

17. Appareil de calibrage destiné à être utilisé dans le calibrage d'appareils de mesure du type susceptible de déterminer la relation spatiale entre une position fixe (18) et une pluralité de points sur un composant mobile (14) de l'appareil de mesure, le composant mobile étant susceptible de se déplacer entre au moins deux positions de mesure, caractérisé par un objet réel ou fictif (22, 50) fixable ou des objets qui définissent des points (24, 52, 60, 62) situés de telle sorte sur le composant mobile (14) que, pour la ou chaque paire de positions de mesure (16) adjacentes, il existe au moins un point (24, 52, 60, 62) dont la relation spatiale par rapport à la position fixe (18) peut être déterminée lorsque le composant mobile (14) occupe l'une ou l'autre des positions de mesure (16) de la paire, la relation spatiale de chaque position de mesure du composant mobile par rapport à une position de mesure adjacente pouvant être déterminée, l'appareil de mesure étant ainsi calibré.
